Europäisches Patentamt

(19) **European Patent Office**

**Office européen des brevets**

(11) Publication number: **0 052 950**

**A1**

(12) **EUROPEAN PATENT APPLICATION**

(21) Application number: **81305107.5**

(22) Date of filing: **28.10.81**

(51) Int. Cl.³: **B 65 G 43/08**
**G 01 S 17/00, G 01 B 11/04**
**G 06 M 7/00**

(30) Priority: **26.11.80 US 210722**
**19.03.81 US 245271**

(43) Date of publication of application:
**02.06.82 Bulletin 82/22**

(84) Designated Contracting States:
**AT BE DE FR GB IT NL SE**

(71) Applicant: **GENERAL SIGNAL CORPORATION**
**High Ridge Park**
**Stamford Connecticut 06904(US)**

(72) Inventor: **Zenisek, Michael J.**
**18770 Fox Road**
**Hiram Ohio 44234(US)**

(74) Representative: **Wain, Christopher Paul et al,**
**A.A. THORNTON & CO. Northumberland House 303-306**
**High Holborn**
**London WC1V 7LE(GB)**

(54) **Optical edge detector.**

㊄ an optical sensor (10) of simple, low cost construction for detecting the entry of the leading edge (41) of a light-reflective surface (40) into the sensor's field of view includes an infrared sensitive phototransistor (20) positioned at the end of a light-collimating channel (16). A pair of pulse-powered, infrared, light-emitting diodes (30, 32) are also positioned at the phototransistor end of the collimating channel and bracket the phototransistor to highly illuminate an axially extending sector of the phototransistor field of view immediately adjacent the other end of the collimating channel. A pulse generating circuit stabilized for temperature and ambient light variations is connected to the phototransistor to provide a fast rise-time pulse in response to the detected leading edge. Proper dimensioning of the collimating channel length (L) and width minimizes errors caused by wandering of the reflective surface to and away from the sensor as the surface moves past it.

FIG. 1

- 1 -

OPTICAL EDGE DETECTOR

The present invention relates in general to optical sensors, and in particular to leading edge detectors used to measure the time it takes a linearly moving, light-reflective surface to travel from one point to another.

The invention finds particular application in the calibration of moving belt conveyors used to accurately meter quantities of bulk material carried by the conveyor, such as coal being fed to a power plant boiler. Modern conveyors of this type normally include a belt speed transducer providing an electronic signal indicative of belt travel or velocity. This signal is used with other conveyor parameters to indicate and regulate the amount (weight, volume, etc.) of material being delivered by the moving belt as a function of time.

Occasionally, it becomes necessary to determine the presence of and degree of error between actual conveyor belt speed and belt speed as indicated by the belt speed transducer. Upon determining the error between actual and indicated belt speed, appropriate calibration adjustments can be effected to ensure the accuracy of the metering conveyor.

One method of measuring actual belt speed requires the use of a pair of leading edge detectors precisely spaced apart from each other and positioned in like orientation along one edge of the moving belt. A piece of light-reflective tape is affixed to the moving belt edge adjacent the detectors. As the tape moves past a detector, a signal, such as a fast rise-time pulse, is generated by the detector to indicate such a passage. By measuring the time between the pulses generated by the detector pair as the tape passes between them, actual belt speed can be easily calculated for comparison with indicated belt speed.

An optical edge detector for use in such a belt speed measuring method is desirably of rugged and simple construction so as to tolerate the hostile environment wherein a majority of bulk material metering conveyors, such as power plant coal feeding conveyors, are located. Further, the detectors as a pair used as noted above must be designed to provide high accuracy under conditions where the belt edge carrying the reflective tape wanders from side to side along its generally linear path of movement. As the tape passes one edge detector, the distance between that edge detector and the tape will more than likely differ from the distance between the tape and the next edge detector due to side-to-side wandering of the belt. Such belt wandering must be considered in designing an edge detector for use as noted above.

In accordance with the present invention, there is provided an optical edge detector, comprising: an incoherent light source for illuminating at a predetermined wavelength range an area through which a relatively moving light-reflective surface passes, a photosensitive semiconductor element responsive primarily to said predetermined wavelength range, an incoherent, light-collimating, lensless channel positioned for light communication between at least one of said source and element and said illuminated area, the length of the channel being substantially greater than its width, and a pulse generating circuit having an input connected to the photosensitive semiconductor element and an output for providing a fast rise-time pulse generally at the time of entry of the leading edge of the light-reflective surface into the field of view of the photosensitive semiconductor within said illuminated area, said fast rise-time pulse being generated upon a rapid change in the conductivity state of said photosensitive semiconductor element in response to reflected light from said leading edge, said reflected light being provided by the light source to the photosensitive semiconductor element via said collimating channel.

In one embodiment, the detector includes a pair of generally identical plates precisely spaced apart from each other in parallel relation to define the width of the collimating channel. The light source comprises a pair of pulse powered, infrared, light- emitting diodes mounted at one end of the plate pair and the photosensitive element comprises an infrared sensitive phototransistor positioned between the diodes and equidistantly spaced from them. The diodes illuminate an area adjacent the other end of the plate pair within the field of view of the phototransistor. A light-reflective surface passing across such area is detected by reflecting infrared light provided by the diodes back to the phototransistor via the collimating channel.

In another emebodiment, the detector includes a straight tubular element in place of the plate pair noted above. The tubular element is closed at one end by a cap having a rectangular aperture defining the width of the collimating channel, the diodes and phototransistor being located at the other end of the tubular element.

Embodiments of the present invention will now be described, by way of examples only, with reference to the accompanying drawings, in which:

FIG. 1 is a perspective view of a first embodiment of an optical sensor in accordance with the invention, wherein a light-reflective surface is passing in front of the sensor through its field of view;

FIG. 2 is a rear elevation view of the sensor illustrated in FIG. 1;

FIG. 3 is a longitudinal cross section elevation view of the sensor illustrated in FIG. 1;

FIG. 4 is a longitudinal cross section plan view of the sensor of FIG. 3 taken along line 4-4;

FIG. 5 is a schematic diagram of a suitable circuit for pulsing a pair of light-emitting diodes used in accordance with the present invention;

FIG. 6 is a pulse generating circuit used in conjunction with a phototransistor in accordance with the pres- ent invention.

FIG. 7 is a perspective view of a second embodiment of an optical sensor in accordance with the invention, wherein a light-reflective surface is passing in front of the sensor through its field of view; and

FIG. 8 is a longitudinal cross section plan view of the sensor of FIG. 7 taken along line 8-8.

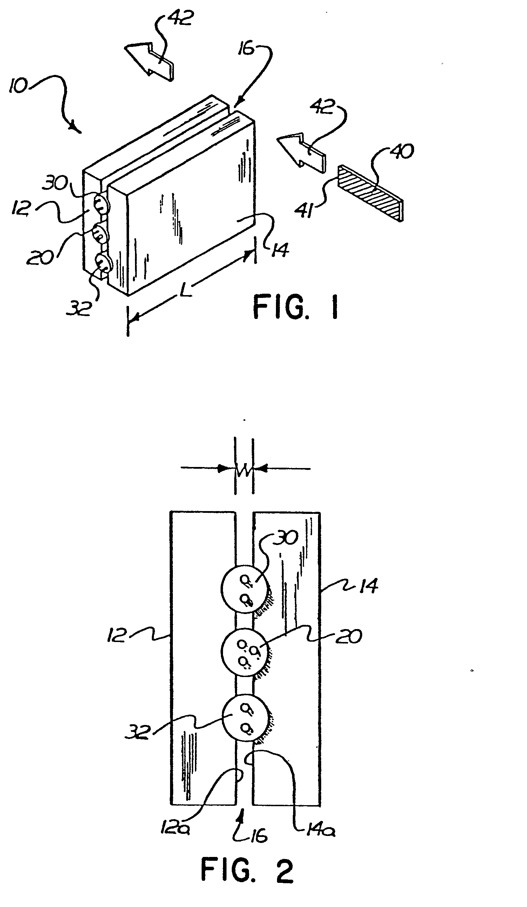

In accordance with the present invention, and with particular reference to FIGS. 1 and 2, there is illustrated an optical sensor 10 including a first collimator channel defining plate 12 and a second collimator channel defining plate 14, the plates being generally identical to each other and spaced apart in parallel relation to define a light-collimating, lensless channel 16. The plates 12,14 can be formed of any suitable material, such as metal, plastic, or the like. The width W of the collimating channel 16 is substantially less than the length L of the plates 12,14. For example, the width W is in the range of .025 to .100 inch, while the length L is in the range of 4.0 to 4.5 inches. The plates 12, 14 are held in position relative to each other, as illustrated in FIGS. 1 and 2, by conventional means (not illustrated).

Mounted at the rearward end of the sensor 10, i.e., the leftward end as viewed in FIG. 1, is an array of semiconductor elements including a photosensitive semiconductor in the preferred form of a phototransistor 20 which is center-mounted between the plates 12, 14 at the rear end of the collimating channel 16 by any suitable means. Bracketing the phototransistor 20 are a pair of light-emitting diodes, including a first light-emitting diode 30 and a second light-emitting diode 32. The diodes 30,32 are each equidistantly spaced from the phototransistor 20 and together comprise an incoherent light source for illuminating a light-reflective surface 40 having a leading edge 41 passing into and through the field of view of the phototransistor 20 along a linear path indicated by arrows 42, such linear path being generally perpendicular to and traversing the collimating channel 16.

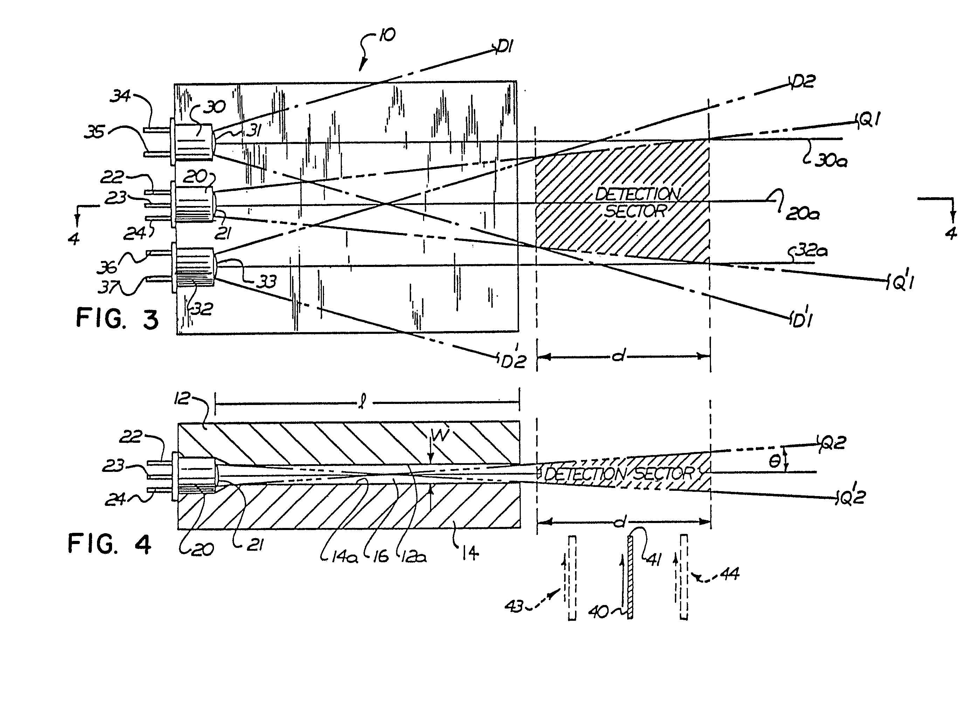

As can be seen in FIG. 2, the phototransistor 20 and the light-emitting diodes 30, 32 are centered between the inner walls 12a, 14a of the plates 12 and 14, with the cases of the transistor 20 and the diodes 30,32 being preferably embedded in appropriately sized recesses in the plates so that a width W in the range of .025 to .100 inch can be provided. The inner walls 12a,14a are preferably of a flat black finish to minimize spurious light reflections. A longitudinal view axis 20a and longitudinal illumination axes 30a, 32a of the phototransistor 20 and the diodes 30, 32, respectively, are parallel to the walls 12a, 14a and centered in the collimating channel 16, as will be seen more clearly with reference to FIGS. 3 and 4.

Turning to FIGS. 3 and 4, there is illustrated in greater detail the preferred geometric orientation of the phototransistor 20 and the light-emitting diodes 30, 32 relative to each other and to the plates 12,14 defining lensless collimating channel 16 (FIG. 1).

The phototransistor 20 is of conventional design, and includes an optical lens 21 having the longitudinal view axis 20a and a field of view defined by lines Q1,Q'1 and Q2,Q'2. The diodes 30,32 are likewise of conventional design and include longitudinal view axes 30a, 32a. The field of view or the field of illumination of the first diode 30 is defined by a pair of axis lines D1 and D'1, while the field of illumination of the second diode 32 is defined by axis lines D2 and D'2. Electrical connection for the transistor 20 to an external circuit means is provided by a collector lead 22, a base lead 23, and an emitter lead 24, while the light-emitting diodes 30,32 include respective anode leads 34,36 and cathode leads 35,37.

The diodes 30,32 include conventional optical lenses 31,33 through which light is provided to illuminate their respective fields of view, the axes 30a,32a being generally parallel on the axis 20a of the phototransistor 20. The overlapping fields of view of the phototransistor 20 and the diode pair 30,32 serve to define an illuminated edge detection zone or sector d, as illustrated in FIGS. 3 and 4, through which the light-reflective surface 40 having a leading edge 41 will pass and be detected in a manner to be described.

As noted earlier, the present invention finds particular use wherein a pair of the sensors 10 are precisely positioned a known distance from each other along the edge of a moving belt to which a piece of reflective tape is fastened, the tape constituting the reflective surface 40 having the leading edge 41. The edge of the belt, and thus the leading edge 41, may wander to a limited degree from side to side of its generally linear movement path, as illustrated by arrows 42 (FIG. 1), as it moves between the two sensors. Upon entering the detection sector d, the leading edge 41 will reflect light from the light-emitting diodes 30,32 back to the phototransistor 20 to trigger a pulse-generating circuit (to be subsequently illustrated), thus indicating the detection of the light-reflective surface 40. It can be seen that in moving from the first sensor to the second, the light-reflective surface 40 may be at a position (such as position 43) close to the first sensor only to move or wander away from the second detector (such as to position 44), wherein errors in the measuring of time and travel of the leading edge 41 from one sensor to the other could result, since the upstream edge (axis Q'2) of the phototransistor's field of view is not always perpendicular to the path of linear movement followed by the reflective surface 40.

To limit such error, the spread angle $\theta$ (see FIG. 4) of the detection sector is limited to about .5° or less by minimizing the width of the collimator channel 16 and maximizing the collimator channel length 1 to the degree feasible. In a preferred commercial embodiment of the present invention, the width W is chosen to be .075 inch, while the collimator channel length 1 is 4.3 inches. These dimensions provide a spread angle $\theta$ of about .5° or less, which is acceptable from an error standpoint to compensate for limited wandering (e.g., ± 1/4 inch) of the light-reflective surface
40 to and away from the detectors as it moves past them.

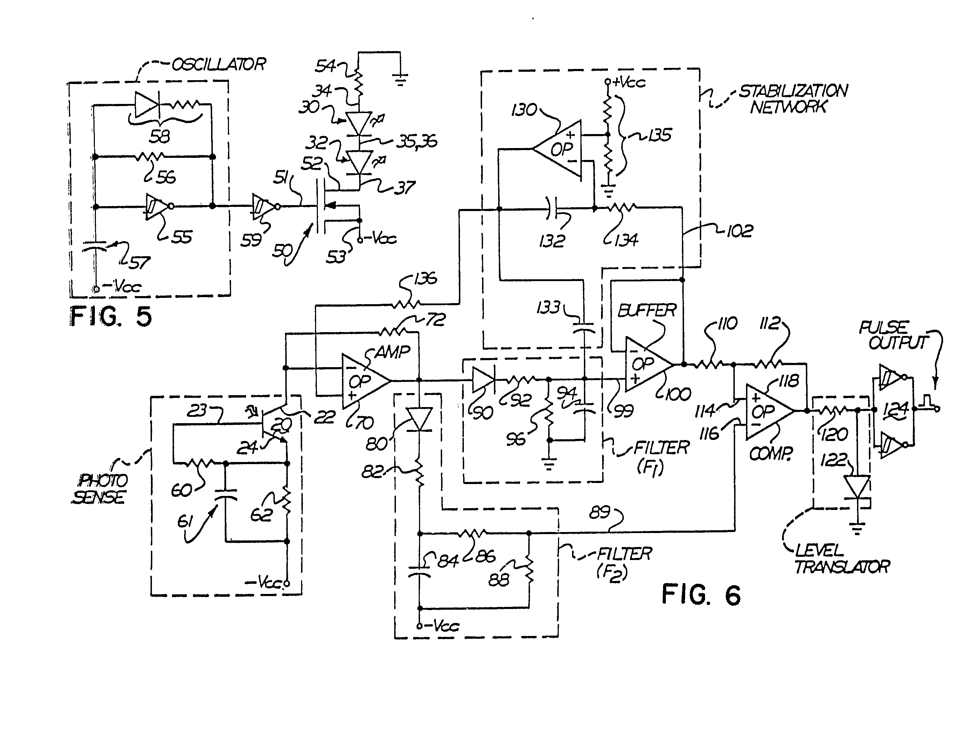

Turning to FIGS. 5 and 6, there is illustrated a
suitable light-emitting diode power circuit (FIG. 5) and a
pulse generating circuit (FIG. 6) for use with the optical
edge detecting sensor 10 discussed earlier.

The circuit of FIG. 5 simultaneously pulses, at relatively high current levels, the light-emitting diodes 30 and
32. To permit such preferred high current level pulsing and
the resultant high illumination output of the diodes 30, 32,
a high frequency, low duty cycle, square wave oscillator is
necessary to trigger the diodes 30,32 into and out of conduction. The oscillator includes a conventional CMOS-type
Schmitt trigger 55 inverter with hysteresis, having connected
across it a high-time resistor 56 and a low-time resistor and
charging diode network 58. A frequency determining capacitor
57 cooperates in alternating fashion with the resistor 56 or
the network 58 to trigger the inverter 55 output between digital states, preferably at about a 20 KHz rate, although a
frequency range of 10-30 KHz is acceptable. By proper sizing
of the resistance of the network 58 and the resistor 56, the
duty cycle of the square pulses provided at the output of the
inverter 55 can be varied to establish a desired duty cycle.
A duty cycle of about 10 to 30 percent has been found to be
acceptable in practicing the teaching of the present invention. The output of the inverter 55 is provided, via a second Schmitt trigger inverter 59, with hysteresis, to the gate
electrode 51 of a high power metal oxide semiconductor field
effect transistor (MOSFET). The transistor 50 is capable of
handling high current and controlling it with very low gate
voltages of very short duration, e.g., in the 2-4 volt and
100-200 nano second range. The light-emitting diodes 30,32 are connected in series with each other, with their cathode ends connected to the drain electrode 52 of the transistor 50. The anode end of the light-emitting diode pairs 30,32 is connected to electrical ground via a conventional current limiting resistor 54, while the source electrode 53 of the transistor 50 is tied to the negative side of the supply voltage. It can be seen that the diodes 30,32 are pulsed on and off at a 20 KHz rate and at a relatively low duty cycle of 20 to 30 percent, wherein high current on the order of 1 amp can flow through them to effect bursts of high illumination light output, preferably primarily in the infrared wavelength range. It has been found that the use of infrared type diodes (and an infrared-sensitive phototransistor) minimizes problems caused by ambient light and enhances the detection capabilities of the sensor in accordance with the present invention.

Turning to FIG. 6, there is illustrated a suitable fast rise-time pulse generating circuit connected to the phototransistor 20 illustrated and discussed earlier with regard to FIGS. 1 through 4.

The phototransistor 20 is included as part of a photosensitive network wherein the emitter electrode 24 of the phototransistor 20 is tied to the negative side of the supply via a DC current providing resistor 62, which is paralleled by a bypass capacitor 61 which yields a high gain to a rapid change in the conductivity state of the phototransistor 20. A base-emitter junction biasing resistor 60 is connected between the base electrode 23 and emitter electrode 24 to bias the base-emitter junction of the phototransistor 20 in a conventional manner.

The collector electrode 22 is connected to the inverting input of an operational amplifier 70 (connected in a differential amplifier configuration) having its output connected back to its inverting input via a feedback resistor
72. A reference voltage is established at the non-inverting
input of the op amp 70 in a manner to be subsequently discussed.

The output of the amplifier 70 is connected both to
a first filter network F1 and a second filter network F2.
The filter network F1 includes an input diode 90, an input
resistor 92, and an RC network comprised of a resistor 96 and
a capacitor 94. In a similar fashion, the second filter network F2 includes an input diode 80, an input resistor 82, and
an RC circuit comprised of a pair of resistors 86 and 88 and
a capacitor 84.

The filter networks F1, F2 comprise demodulation
filters having different response times. The networks are
both passive and of conventional construction. The output 99
of the first filter is fed to the non-inverting input 114 of
a comparator-connected operational amplifier 118 via an operational amplifier buffer 100 connected in a voltage follower
configuration. The output 89 of the second filter in turn is
fed to the inverting input 116 of the comparator 118. A
feedback resistor 112 is connected between the output of the
comparator 118 and its non-inverting input 114, while an
input resistor 110 is placed in series between the output of
the buffer op amp 100 and the non-inverting input 114. The
output of the comparator 118 is connected to a level translator, including a resistor 120 and diode 122, the level
translator serving in a conventional fashion to modify one
digital input signal at a pair of voltage levels to a second
digital input signal at a different pair of voltage levels.
The output of the level translator in turn is fed to a pair
of paralleled Schmitt trigger inverters 124 with hysteresis
to provide at their combined outputs a fast rise-time pulse.

To provide temperature and ambient light stabilization, a stabilization network is provided between the buffer
100 and the non-inverting input of the op amp 70. Inputs to
the stabilization circuit include a capacitor 133 having one
end connected to the output 99 of the first filter F1 and the
output of a stabilization op amp 130. The input to the stabilization network also includes an input line 102 connected
from the output of the buffer amp 100 to the inverting input
of the stabilization op amp 130 via a resistor 134. An integrator functioning feedback capacitor 132 is connected in
conventional fashion across the output and inverting input of
the op amp 130 having a reference voltage established at its
non-inverting input by a voltage divider network comprised of
a pair of resistors 135. The output of the stabilization amp
130 is connected to establish a floating reference voltage at
the non-inverting input of the op amp 70 via a resistor 136.

The stabilization network serves as an automatic
gain control to vary the reference voltage at the noninverting input of the op amp 70 in accordance with temperature
variations and ambient light conditions experienced at the
base-emitter junction of the phototransistor 20.

The operation of the circuit illustrated in FIG. 6
and its design are conventional in nature, and it operates in
a general manner as follows. Ambient light variations and
temperature variations at the base-emitter junction of the
phototransistor 20 may cause small variations in the conductivity state of the phototransistor 20, such small variances
being compensated for via the stabilization network to preclude any spurious pulse output from the Schmitt trigger network 124. As discussed earlier, upon the entry of the leading edge 41 into the detection sector d (see FIGS. 1 through
4), the pulsating, high frequency, short duration light output bursts from the infrared diodes 30 and 32 are reflected from the leading edge back to the phototransistor 20 via the
collimator channel 16. The phototransistor 22 is of a type
that is primarily sensitive to the infrared light range generated by the diodes 30, 32. Such reflective light causes a
rapid, quantitative switch in the conductivity level of the
phototransistor 20. For example, the transistor 20 is forced
into or near saturation, wherein the voltage state at the
inverting input of the amplifier 70 changes relative to the
current reference voltage at the non-inverting input of the
amplifier 70. An output signal is generated by the op amp
70, such output signal being provided simultaneously to the
filters F1 and F2. Because of their different time responses, the comparator 118, having its input tied to the
outputs of the two filters, will, in response to the conductivity change of the phototransistor 20, provide an output
signal that is then shaped into a fast rise-time digital
pulse via the level translator and the Schmitt trigger network 124.

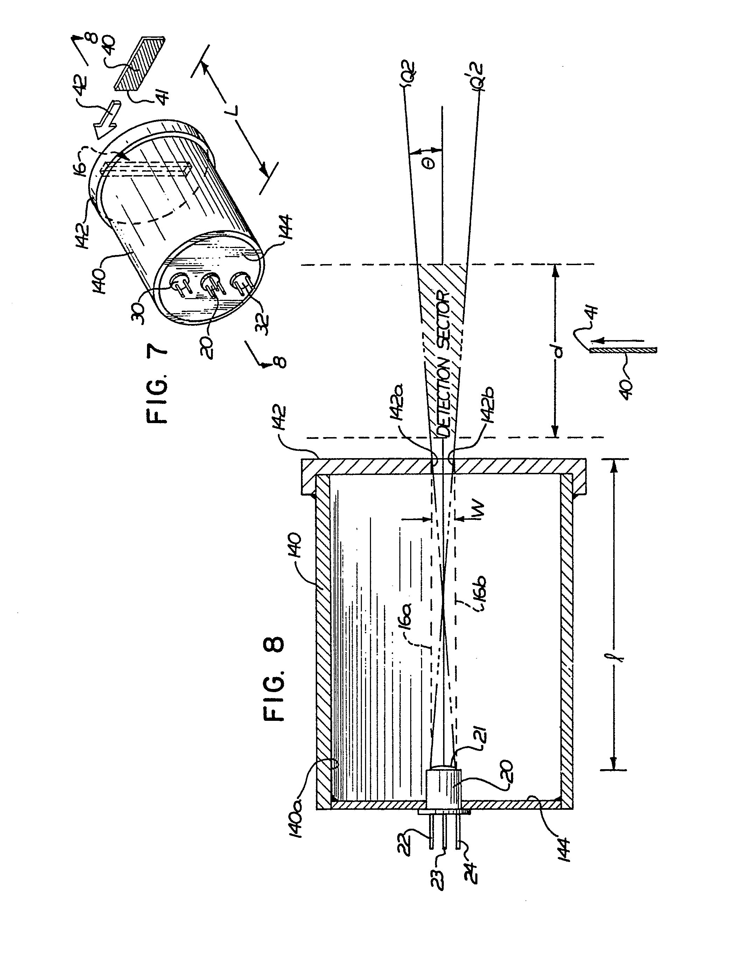

FIGS. 7 and 8 illustrate another embodiment of the
invention for use with the circuitry of FIGS. 5 and 6, wherein a straight tubular element 140 functions in a manner gener-
ally identical to the plates 12, 14 illustrated earlier to
provide the light collimating channel 16. An end cap 142
closes one end of the tubular element and includes a rectangular aperture or slot defined by slot walls 142a, 142b defining the width W and height of the collimating channel.
Like the inside surface 12a, 14a of the plates 12, 14, the
interior surface 140a of the tubular element 140 is preferably of a flat black finish to minimize spurious light reflections. The tubular element 140 and the end cap 142 can
be formed of metal, plastic or the like.

Located and fixed at the other end of the tubular element 140 by a suitable support structure 144 such as a circuit board type mounting plate is the phototransistor 20 bracketed by the diodes 30, 32. The elements 20, 30 and 32 lie in the plane generally defined by the rectangular aperture or slit provided by the end cap 142. The width W of the end cap aperture defines the width of the rectangular collimating channel 16 (indicated by the axis lines 16a, 16b) while the length 1 of the tubular element 142 is approximately equal to the collimator channel length. The length and width dimensions (1 and W) are preferably in the range discussed earlier with regard to the embodiment of FIGS 1 through 4 to limit the spread angle θ for the reasons noted above. The use of an end-capped tubular element, as opposed to a pair of plates, minimizes some machining and assembly problems inherent with the plate-pair embodiment. However, the plate design may be more desirable wherein mounting space for the edge detector structure relative to a conveyor belt is at a minimum. It is also noted that other structural element configurations for providing the collimating channel 16 are clearly possible.

The present invention as illustrated by the embodiment in FIGS. 1 through 4, and in FIGS. 7 and 8, when combined with the circuitry of FIGS. 5 and 6, provides a very rugged sensor for detecting the incidence of the leading edge of a light-reflective surface into its field of view. Further, the use of a pair of sensors and their accompanying circuitry to calibrate conveyor belt speed, as discussed above, has proved to be highly accurate. The sensor in accordance with the invention is very low in cost as compared with other systems, such as those based on lasers. Finally, the sensor in accordance with the invention is safe for handling by service personnel, since only relatively low voltages

(± 15 volts) are typically present, as opposed to a laser-based system wherein dangerously high voltages in the kilovolt region are typically present along with laser light that can be harmful even at low power levels to the eye retina, for example.

CLAIMS

1.      An optical edge detector, comprising:  an incoherent light source for illuminating at a predetermined wavelength range an area through which a relatively moving light-reflective surface passes, a photosensitive semiconductor element responsive primarily to said predetermined wavelength range, an incoherent, light-collimating, lensless channel positioned for light communication between at least one of said source and element and said illuminated area, the length of the channel being substantially greater than its width, and a pulse generating circuit having an input connected to the photosensitive semiconductor element and an output for providing a fast rise-time pulse generally at the time of entry of the leading edge of the light-reflective surface into the field of view of the photosensitive semiconductor within said illuminated area, said fast rise-time pulse being generated upon a rapid change in the conductivity state of said photosensitive semiconductor element in response to reflected light from said leading edge, said reflected light being provided by the light source to the photosensitive semiconductor element via said collimating channel.

2.      An optical edge detector according to claim 1, wherein said predetermined wavelengh range is in the infrared region.

3.      An optical edge detector according to claim 1 or 2, wherein said collimating channel is positioned for light communication between said illuminated area and both said source and element.

4.      An optical edge detector according to any preceding claim wherein said source and element have overlapping fields of view in at least a portion of said illuminated area.

5.      An optical edge detector according to any preceding claim, wherein said light source comprises a pair of infrared light-emitting diodes, said semiconductor element comprises an infrared sensitive phototransistor, and said light-collimating, lensless channel includes a length portion of generally rectangular transverse cross section, with the diodes and the phototransistor positioned at one end of the channel, the diodes and the phototransistor having overlapping fields of view in said illuminated area adjacent the other end of the collimating channel.

6.      An optical edge detector according to claim 5, wherein the phototransistor is positioned intermediate the light-emitting diodes and equidistantly spaced from each of them.

7.      An optical edge detector according to claim 5 or 6, wherein the collimating channel is provided by a pair of generally identical, spaced apart plates in parallel relation to each other, the distance between the plates constituting the width of the collimating channel, the lengths of the plates being approximately equal to the length of the collimating channel, the diodes and the phototransistor being fixed to and supported by one end of the plate pair.

8.	An optical edge detector according to claim 5 or 6, wherein the collimating channel is provided by a straight tubular element, the diodes and the phototransistor being positioned at and fixed to one end of the tubular element,the other end of the tubular element being closed by an end cap including a rectangular aperture, the length of the tube being approximately equal to the length of the collimating channel, the width of the rectangular aperture constituting the effective width of the collimating channel.

9.	An optical edge detector according to claim 7, arranged for said light-reflective surface to move relative to said plates in view of said phototransistor along a line generally perpendicular to said plates wherein said channel is directly transversed.

10.	An optical edge detector according to claim 7, 8 or 9, wherein said width is .025 - .100 inch and said length is 4.0 -4.5 inches.

11.	An optical edge detector according to any one of claims 5 to 10, comprising means for pulsing the diodes at a high frequency rate and at a low duty cycle.

12.	An optical edge detector according to claim 11, arranged for said high frequency rate to be 10-30 kilohertz and said duty cycle to be 10-30 percent.

0052950

FIG. 1

FIG. 2

FIG. 3

FIG. 4

0052950

FIG. 5

FIG. 6

FIG. 7

FIG. 8

DETECTION SECTOR

0052950

0052950

**European Patent Office**

# EUROPEAN SEARCH REPORT

Application number

EP 81305107.5

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | AT - B - 316 359 (SAURER)<br>    * Fig. 1,2; page 3, line 10 - page 4, line 10 *<br>& US-A-3 768 912<br><br>-- | 1,3,9 | B 65 G 43/08<br>G 01 S 17/00<br>G 01 B 11/04<br>G 06 M 7/00 |
| | US - A - 4 166 949 (PÖLD)<br>    * Fig. 2-4; abstract; column 3, line 57 *<br><br>-- | 1-3,5, 6 | |
| | FUNKTECHNIK, 31. Jahrgang, No. 19, 1976, Dr. Alfred Hüthig Verlag GmbH, Heidelberg<br>H. SCHREIBER, ORSAY "Empfindliche Lichtschranke"<br>page 630<br>    * Page 630, lines 1-17 *<br><br>-- | 1,2 | |

TECHNICAL FIELDS SEARCHED (Int Cl³)

G 01 S 17/00
G 01 B 11/00
G 01 P 3/00
G 06 M 7/00
G 08 B 13/00
B 07 C 3/00
B 07 C 5/00
B 65 G 43/00

| | | | |
|---|---|---|---|
| | FUNKSCHAU, Heft 4, 1975, Franzis-Verlag, München<br>DIPL.-ING. JÜRGEN WOLF "Alarmsystem mit Infrarot-Wechsellichtschranken"<br>pages 65-70<br>    * Page 66, left column, lines 4-8 *<br><br>-- | 1,2,11 | |
| | US - A - 3 862 415 (HARNDEN)<br>    * Fig. 4; abstract; column 4, line 26 *<br><br>-- | 1-3,5-7,9 | |
| | GB - A - 1 050 400 (UNITED STATES ATOMIC ENERGY COMMISSION)<br>    * Fig. 1-4; page 3, lines 39-44 *<br><br>---- | 1,3,8,10 | |

| X | The present search report has been drawn up for all claims | | |
|---|---|---|---|
| **Place of search**<br>VIENNA | **Date of completion of the search**<br>17-02-1982 | **Examiner**<br>DRÖSCHER | |

EPO Form 1503.1  06.78